# EUROPEAN PATENT APPLICATION

(11) **EP 4 287 359 A1**
(43) Date of publication of application: **06.12.2023**
(21) Application number: 22176073.9
(22) Date of filing: 30.05.2022
(51) Int. Cl.: H01M 10/6551, H01M 10/613, H01M 10/625, H01M 10/647, H01M 10/6555

(54) **THERMAL FIN FOR A BATTERY APPARATUS AND BATTERY MODULE COMPRISING THERMAL FINS**

(71) Applicant: Newfrey LLC, New Britain, CT 06053 (US)
(72) Inventor: AKBARINIA, Alireza, 35394 Gießen (DE); WISSLING, Matthias, 35394 Gießen (DE); MEIER, Michael, 35394 Gießen (DE); FORTI, Adam, Sterling Heights, 48313 (US)
(74) Representative: SBD IPAdmin

(57) **Abstract**

Thermal fin (26) for a battery apparatus configured to prevent thermal propagation between battery pack subassemblies comprising a first and/or a second contact unit (28, 30) adapted to be in facing contact with a first and a second battery pack subassembly and a supporting unit (32) sandwiched between the first and the second contact unit (28, 30). The thermal fin (26) extends in a fin plane, has a fin length in cross section along a longitudinal axis and a fin thickness, and the thermal resistance within the fin plane is lower than the thermal resistance in a direction normal to the fin plane, such that the thermal fin ensures a thermal management function and a thermal safety function of the battery apparatus.

## Description

### Background of the Invention.

The field to which the disclosure generally relates includes methods and assemblies for thermal management of the temperature of battery components and thermal safety features for limiting cell-to-cell thermal propagation within a battery. More particularly, but not exclusively, the invention relates to a battery module having a number of electrically interconnected battery cells, wherein the individual battery cells are temperature-controlled by means of heat removal and heat insulation.

In this application "thermal management" function and objective shall mean maintaining a battery and its individual subassemblies withing desired temperature limits (minimum and maximum) and within a desired variation (ΔT) band from one subassembly to another. "Thermal safety" function shall mean limiting heat propagation between battery subcomponents, in particular from cell to cell, with the objective of preventing a thermal runaway event (defined below).

In the present context, the terms "battery cell", "battery module", "battery section", and "battery pack" (as well as their shortened variants "cell", "module", "section", and "pack") are used to describe different levels of components of an overall battery assembly. For example, numerous individual battery cells form the building blocks of battery modules. Multiple battery modules (in conjunction with ancillary equipment) in turn make up a battery pack.

For purposes of this application, a cell is the smallest unit of a battery pack that includes a single anode electrical connection and single cathode electrical connection on the exterior or a sealed housing that contains one or more pairs of anode and cathode elements. A cell is a single electrochemical unit, whereas a battery is made up of one or more electrically interconnected cells joined in series, parallel or both, depending on desired output voltage, current or capacity.

A battery apparatus may include one or more battery packs suitably sized to provide electrical power to the vehicle. Battery packs are made up of battery sections which may be made up of numerous battery modules each of which is in turn made up of one or more battery cells that deliver electrical current to a load. The battery cells are electrically interconnected.

Battery packs are made up of sections which may be made up of numerous battery modules each of which is in turn made up of one or more battery cells that deliver electrical current to a load. The number of battery cells within the larger battery module, section, pack or related structure will be appreciated by those skilled in the art to coincide with the power needs of the device receiving electric current from the battery, as well as the thermal operating requirements of the cells within the battery. In such batteries, current flow, both charge and discharge, generates heat inside the cells and in their interconnection systems.

Electric Vehicles (EVs) use lithium-ion batteries comprised of cells. The performance of a lithium-ion battery cell is very dependent on its temperature. When overheated, the cells can experience degraded electrical performance, damage, and reduced lifespan. Thus, lithium-ion batteries require thermal management systems to maintain a constant temperature with very low temperature deviations (the temperature distribution over a cell should be uniform with a maximum deviation of less than 5°C) so that they can operate efficiently without damages or failures.

Additionally, lithium-ion batteries may experience a failure called thermal runaway. The term thermal runaway event refers to an uncontrolled increase in temperature in a battery system. Thermal runaway is a chain reaction within a battery cell that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat. During a thermal runaway event, the generation of heat within a battery system or a battery cell exceeds the dissipation of heat, thus leading to a further increase in temperature. A thermal runaway event may be triggered by various conditions, including a short circuit within the cell, improper cell use, physical abuse, manufacturing defects, or exposure of the cell to extreme external temperatures.

One of the important issues in the construction of an electric vehicle is the thermal management and thermal safety systems of the battery (notably lithium-ion batteries have been widely used in electric vehicles).

Thermal management is essential for the performance and operating life of electric vehicle batteries and several studies, disclosures, and patent documents deal with this issue.

It is for instance known to use cooling fins to conduct heat away from the battery cells. The cooling fins may be made of a material with a high thermal conductivity (alternatively, low thermal resistance) to transfer heat to a cooler or heat exchanger.

It is also known to cool electric vehicle batteries by forced convection with a forced air or liquid coolant circulated through cooling passages. For instance, documents US2021135307A1, US2014308551A1 and US2008305388A1 disclose a liquid-cooled battery system. US2016204483A1 also discloses cooling fins configured to receive the flow of the liquid coolant through a coolant channel and discloses cell-to-cell thermal insulation within a battery system using passive cooling, such as conduction, radiation, or convective cooling without active circulation of a cooling fluid.

In US2008/0305388, thin, substantially planar, but not necessarily flat, heat conducting fins in contact with the individual battery cells conduct heat away from the cells to a heat exchanger comprising pipes containing a cooling fluid. The fins connect to the pipe at an extremity of the fin and the pipe is outside the perimeter of the cell pack.

In US2014/0308551, various embodiments disclose inter-cell thermal fins incorporate coolant fluid conducting channels within the fins between adjacent cells. The fluid conducting channels are in in fluid connection with a manifold outside the perimeter of the cells.

US2021/0135307 also describes various embodiments in which a cooling fluid circulates through fluid channels within a substantially planar cooling fin located between adjacent cells.

In US20160204483, multiple embodiments also describe cooling fins with fluid channels for actively circulated coolant and describe the addition of elements that will allow for passive (for example, gravity) flow of coolant in the event that active (pumped) flow is lost, to mitigate spreading of a thermal runaway between cells.

These systems require a complex fabrication and there is still a need to provide cooling system which ensure a thermal management function by removing excess heat from the cells while limiting thermal propagation between the battery cells or the battery modules or between a battery pack and the rest of the vehicle.

The present invention relates generally to a thermal fin to enable cooling of individual battery cells, battery modules, or battery packs and to insulate between adjacent battery cells, battery modules, or battery packs. The present invention also relates to a battery module comprising such thermal isolators.

An aspect of the invention will involve the choice of certain material and their arrangement to achieve the thermal management and thermal safety functions. Thermal Interface Materials (TIMs) are useful for thermal management in electronic components, as they enhance heat transfer from a heat-generating component (here, a battery cell) to a heat dissipater (heat sink, heat exchanger, or cooler). One important aspect when selecting a TIM for a certain application is knowing the material's ability to transfer heat, which is often given by way of thermal conductivity and/or thermal resistance. Thermal conductivity is a material property and describes the ability of the given material to conduct heat. A material with high thermal conductivity is a better thermal conductor. This property is independent of material size, shape, or orientation in a homogeneous material, and because of this, thermal conductivity is an idealized value. Thermal conductivity is measured in units of Watts / meter-Kelvin.

Thermal resistance is merely the mathematical inverse of conductivity. Since both thermal conductivity and resistance are a function of distance (note "meter" in the denominator of Watts / meter-Kelvin), thinner TIMs transfer heat more efficiently than thicker ones. The thermal resistance of a structure is measured between a first point and a second point and depends on the thermal resistance of the individual homogenous elements and all contact resistances in between. When a structures' thermal resistance is lower, the structure is a better thermal conductor. Factors such as surface roughness, surface flatness, clamping pressure, presence of adhesive, non-homogeneous, and material thickness all have large impacts on the material's thermal resistance. Thus, thermal resistance accounts for more variables specific to the structure. Thermal resistance is usually expressed in units of m2 K /Watt.

### Brief Summary of the Invention.

It is an object of the present invention to provide a thermal fin and a battery module that improves the thermal management function by conducting away the heat generated in battery cells to a cooler, for example, and minimizes thermal propagation from cell to cell, module to module and from pack to vehicle. The thermal fin is designed to be arranged between any battery pack-subassembly, such as battery modules, battery cells or battery packs, as disclosed below.

Accordingly, the present invention provides a thermal fin according to claim 1 and a battery apparatus according to claim 11.

More particularly, the thermal fin for a battery apparatus configured to prevent cell-to-cell, module to module and/or pack to vehicle thermal propagation comprises: a first and a second contact unit. The first contact unit (of high thermal conductivity) is in facing contact with a first battery pack subassembly. Such a subassembly being, for example, an individual battery cell, or battery module comprising multiple cells, or a battery pack comprising multiple battery modules. And a second contact unit may be in facing contact with a second battery pack subassembly. A supporting unit (or insulator) is arranged adjacent to the first contact unit. It can also be sandwiched between the first and the second contact unit to create a thermally insulating space between the first and second contact units. The thermal fin extends in a plane and defines a height, and a width, and a thickness. The thermal resistance within the plane is lower than the thermal resistance in a direction normal to the plane, that is across the thickness of the fin, such that the fin provides a thermal management function and a thermal safety function of the battery apparatus.

Such a sandwiched structure provides a low thermal resistance in the plane of the fin, but a good thermal resistance in a direction normal to the fin plane (across the thickness of the fin). The sandwiched structure allows cooling of individual cells while insulting one cell from an adjacent cell. Thus, less than 20% (and even more particularly less than 10%, and even more particularly less than 5%) of the heat is transferred from one battery pack subassembly to another battery pack subassembly. This arrangement also promotes a uniform temperature within a cell.

In an embodiment, the supporting unit comprises a structure arranged such that an insulating gap (notably a fluid gap, preferably an air gap) is maintained between the first and the second contact unit. The gap forms an insulation layer which prevents the heat transmission between the cells. In an embodiment, the thermal resistance of the first and/or second contact unit is lower than the thermal resistance of the structure. For instance, the structure comprises a spacer structure adapted to establish insulating gap(s).

In another embodiment, the structure comprises a supporting plate sandwiched between a first and a second spacer, such that insulating gaps, notably fluid gaps, are provided on both sides of the plate. For instance the plate extends parallel to the first and/or second contact unit. Fluid gaps on both sides of the supporting plate increase the thermal resistance.

In another embodiment, the insulating gap is(are) a fluid gap(s) or more particularly an air gap(s). Such air gap(s) is(are) easy to implement and is satisfactory.

In a still further embodiment, the first and/or second contact unit (conductors) and the structure are made of two different materials. More particularly the first and/or second contact unit are made of a material with high thermal conductivity and the structure or supporting unit is made of materials with a low thermal conductivity. For instance, a high thermal conductivity material is a material having a thermal conductivity in the range of 100 to 3000 W·m-1·K-1. Graphite or copper are materials having a high thermal conductivity. In contrast, a low thermal conductivity material is a material having a thermal conductivity below 400 W·m-1·K-1. Some metal, plastics, or glass have a low thermal conductivity.

In another embodiment, the first and/or second contact unit may be made of copper and/or aluminium with or without graphite. In particular, the first and/or second contact unit is made of copper or is made of copper glued to graphite or is made of aluminium glued to graphite. The first and/or second contact unit may also be made of steel alloy glued to graphite.

In an embodiment, the structure is made of paper. A paper insulator is not expensive and is strong enough for this purpose, in particular when coupled to graphite material. Indeed, the graphite offers a good flexibility, and the structure is thus better manipulated (handled).

In an embodiment, the thickness of the fluid gap in cross section is of about 0.05 to 1 mm.

In an embodiment, the support structure has a grid pattern. The grid pattern allows a regular thickness of the fluid gap.

In an embodiment, the thermal fin has a total thickness in a direction normal to the fin plane of less than 10 mm, and in particular between 0.5 and 2 mm.

The present invention is also directed to a battery module comprising a plurality of electrically interconnected battery cells and a plurality of thermal fins as previously described, wherein each thermal fin is arranged in thermal communication with at least two of said plurality of battery cells or battery pack subassemblies, and wherein the first and the second contact units are connected to a cooler.

In an embodiment, the thermal fins and the plurality of battery cells comprise a substantially planar construction such that an adjacently-facing relation is formed between one thermal fin and at least two of said plurality of battery cells.

In an embodiment, the first contact unit is in facing contact with a first battery cell and the second contact unit is in facing contact with a second battery cell.

The invention and its advantages will be better understood from the reading of the following description, given by way of example only and with reference to the accompanying drawings, of which:

### Brief Description of the several Views of the Drawing.

Fig. 1 shows a battery module according to the prior art;
Fig. 2A to Fig. 2l show cross-section views of nine different embodiments of thermal fins according to the invention;
Fig. 3A and Fig. 3B schematically show in an exploded view two further embodiments (embodiments twelve and thirteen) of thermal fins according to the invention, wherein Fig. 3A further shows in dotted lines a first and a second battery cell and a cooler, to form a battery module;
Fig. 4A to Fig. 4C show schematically a battery cell or a battery module with a thermal fin according to the invention, wherein Fig. 4A shows schematically a prismatic battery module or battery cell having a parallelepiped shape, wherein Fig. 4B shows schematically a prismatic battery module or battery cell having an oval shape in cross section, and wherein Fig. 4C shows a cylindrical battery module or battery cell;
Fig. 5A to Fig. 5C show a battery cell or a battery module with a thermal fin according to another embodiment of the invention, wherein Fig. 5A shows schematically a prismatic battery module or battery cell having a parallelepiped shape, wherein Fig. 5B shows schematically a prismatic battery module or battery cell having an oval shape in cross section, and wherein Fig. 5C shows a cylindrical battery module or battery cell.

### Detailed Description of the Invention.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure. In addition, the steps of a method do not necessarily need to be executed in any specific order, or even sequentially, nor need the steps be executed only once, unless otherwise specified.

In some cases, well-known features, structures, or operations are not shown or described in detail. Furthermore, the described features, structures, or operations may be combined in any suitable manner in one or more embodiments. It will also be readily understood that the components of the embodiments, as generally described and illustrated in the figures herein, could be arranged and designed in a wide variety of different configurations.

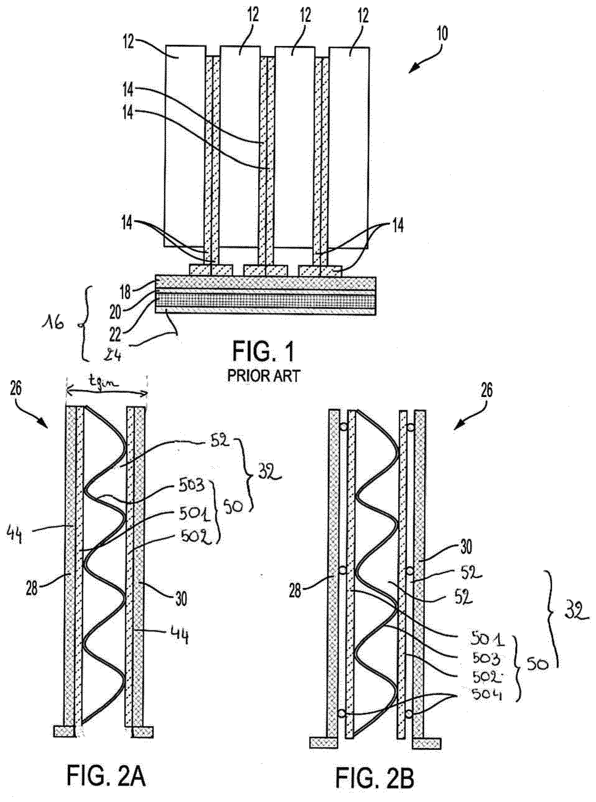

Fig. 1 shows an end view of battery module 10 according to the prior art. The battery module 10 comprises a plurality of battery cells 12. Cooling fins 14 are located between adjacent pairs of cells 12. Each cooling fin 14 is L-shaped in cross section with a first longer surface in contact with a first battery cell and a second surface (a base), smaller than the first surface, in contact with a cooler 16. The cooler 16 may be passive (for example, a radiative heat sink) or active (for example, a heat exchanger to gas or liquid flowing therein). Between two adjacent battery cells 12 are for instance located two L-shaped cooling fins 14. The cooler 16 can be sensibly flat and can comprise several layers 18, 20, 22, 24. The first layer 18 is for instance a thermal pad, the second layer 20 can be a first cold plate, the third layer 22 can be a fluid channel transporting a coolant and the last layer 24 can be a second cold plate. Each battery fin 14 is made for instance in aluminium or other material having a good thermal conductivity and transporting the heat from the battery cell it contacts to the cooler 16.

As previously mentioned, the cooling fins 14 of Fig. 1, by conducting excess heat away from a cell 12, performs a thermal management function but not a thermal safety function (as defined above). Heat transmission between the battery cells is possible and such between cell heat transmission can cause a "runaway event" in neighboring cells. The term thermal runaway event refers to an uncontrolled increase in temperature in a battery system. During a thermal runaway event, the generation of heat within a battery system or a battery cell exceeds the dissipation of heat, thus leading to a further increase in temperature. A thermal runaway event may be triggered by various conditions, including a short circuit within the cell, improper cell use, physical abuse, manufacturing defects, or exposure of the cell to extreme external temperatures. In order to avoid such runaway event, a safety thermal function is necessary.

Fig. 2A to Fig. 21, Fig. 3A, Fig. 3B and Fig. 4 shows several embodiments of a thermal fin 26 according to the invention providing both a thermal management function and a safety thermal function. Such thermal fins 26 are adapted to replace the cooling fins 14 depicted in Fig. 1.

As illustrated in Fig. 2A to Fig. 21, Fig. 3A, Fig. 3B and Fig. 4, an improved thermal fin 26 generally comprises a first contact unit 28, a second contact unit 30 and a supporting unit 32 sandwiched between the first contact unit 28 and the second contact unit 30. The thermal fin 26 has substantially planar geometry, having a thickness much smaller than its hight or length (width). For example, the ratio between the height and the thickness is between 25 and 1000. In this service, planar does not necessarily mean flat. The safety fin may be shaped so as to conform to the outer shape of the battery subassembly, which may be flat, cylindrical, or prismatic.

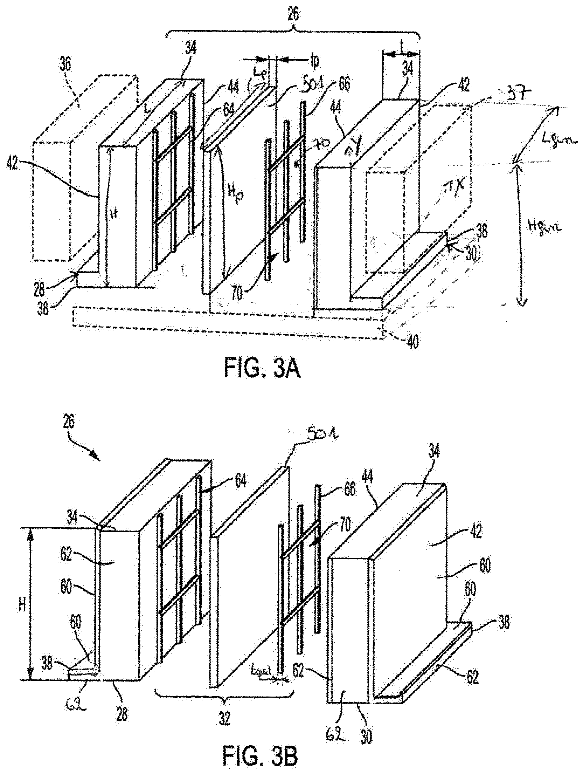

As depicted in FIG. 3A, for example, the first contact unit 28 comprises a substantially flat construction, having a thickness t much smaller than the height H or length L. More particularly the first contact unit 28 comprises a first portion 34 adapted to contact a first battery cell 36 and a second portion 38 adapted to contact a cooler 40 (see dotted line in Fig. 3A). The second portion 38 extends for instance perpendicular to the first portion 34. The first contact unit 28 may be sensibly L-shaped. The first portion 34 is substantially plane with a first surface 42 adapted to face outward and contact the first battery cell 36 and a second surface 44 opposite the first surface and facing inward. The first portion 34 for instance has a hight of about 100 to 300 mm and a thickness of about 0.05 to 1 mm. The second portion 38 has a smaller length and a smaller surface than the first portion 34.

The second contact unit 30 is sensibly identical to the first contact unit 28 (and is arranged in a mirror geometry). The second contact unit 30 comprises a first portion 34 adapted to contact a second battery cell 37 and a second portion 38 adapted to contact the cooler 40. The second portion 38 extends for instance perpendicular to the first portion 34. The second contact unit 30 may be sensibly L-shaped. The second portion 38 has a smaller length and a smaller surface than the first portion. The first portion 34 is substantially planar with a first surface 42 adapted to face outward and contact the second battery cell 37 and a second surface 44 opposite the first surface 42 and inward facing. The first portion 34 for instance has a high of about 100 to 300 mm and a thickness of about 0.05 to 1 mm.

The first and the second contact units 28, 30 are both realized in material having a high thermal conductivity. For instance, the first or second contact unit 30, 28 may be made of graphite, or copper, or aluminium alloy, or steel alloy, or some combination of those materials. They allow a transport of the heat from the first portion 34 to the cooler 40 thus removing heat from within a battery module. Thus, the thermal conductivity within the fin plane formed by the first portions 34 is relatively high.

Between the first and the second contact units 28, 30 is arranged a supporting unit 32. The supporting unit 32 extends between the second surfaces of the first and the second contact units 28, 30. The supporting unit 32 comprises at least one material different than the material of the first or second contact units 28, 30. The supporting unit 32 may be made of a material or materials having a low thermal conductivity. In any case, the supporting unit 32, in its entirety, as a structure, has a high thermal resistance. For example, the supporting unit 32 could comprise a structure 50 made of metal, plastic, glass, paper, an aluminium or a steel alloy. The shape or arrangement of the structure 50 is such that the supporting unit 32 has a thermal resistance higher than the thermal resistance of the contact unit 28, 30. The supporting unit 32 may comprise for instance a structure arranged to provide a fluid gap 52, for instance an air gap, between the first and second contact units 28, 30. Generally, the supporting unit 32 may consist of the structure 50 and the air gap(s) 52.

The first and second contact units 28, 30 generally extend over and contact the majority of the facing surface of a battery cell 36, 37 and are designed to contact the cooler 40. Generally, the supporting unit 32 is not designed to contact the cooler 40, but is designed to entirely extend between, spatially separate, and thermally insulate the first and second contact units 28, 30.

The thermal fin 26 comprising the supporting unit 32 and the first and second contact units 28, 30 extends in a fin plane, has a fin length Lfin, a fin height Hfin, and a fin thickness t_{fin}. The ratio between the thermal fin height Hfin and the thermal fin thickness t_{fin} is between 25 and 1000. The structure of the thermal fin 26 is sensibly planar and may be flat or shaped to conform to the outer form of the battery cell 36, 37. The thermal resistance within the fin plane is lower than the thermal resistance in a direction normal to the fin plane (across the thickness) due to the insulating fluid gap created by the supporting unit and/or the differing thermal conductivities of the different material used on the contact units 28, 30 versus the supporting unit 32. So constructed, the thermal fin 26 provides the thermal management function of removing heat to a cooler 16, 40 and the thermal safety function of insulating against heat propagation between adjacent cells 26, 37 in a battery module or adjacent battery pack subassemblies.

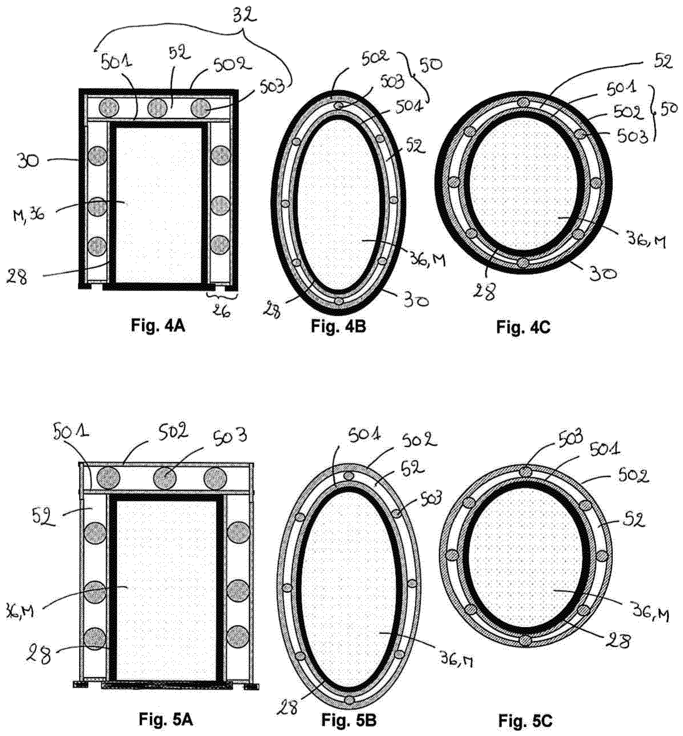

Fig. 3A shows battery cells 36, 37 having a prismatic form. However, as mentioned above the shape of the battery cell may be different. For instance the battery cells may have a cylindrical shape as depicted in Fig. 4. The dotted line in Fig. 4 schematically represents the thermal fin whose shape conforms to the outer form of the cylindrical battery cell. In other embodiments (not represented) the battery cell may also be a pouch cell.

The supporting unit 32 may have different designs or arrangements, as represented for instance in Fig. 2A to Fig. 21, Fig. 3A, Fig. 3B and Fig. 4.

In Fig. 2A, the supporting unit 32 comprises the structure 50 and air gaps 52. The structure 50 comprises a first plate 501 connected to the inner second surface 44 of the first contact unit 28 and a second plate 502 connected to the inner second surface 44 of the second contact unit 30. For instance, the plates 501, 502 extend over the majority of second surface 44 of the contact unit 28 and are in facing contact with said second surface 44. The plates 501, 502 may be glued to the second surface 44 of the contact units 28,30. Between the first and the second plates 501, 502 is located a spacer structure 503. The spacer structure 503 is wavy in cross section (corrugated) and forms a plurality of fluid gaps or air gaps 52 between the first and the second plates 501, 502. The wavy spacer structure 503 and the first and second plates 501, 502 may be made of the same material. Said material is of low thermal conductivity, for instance it could be a structured metal, a plastic, a glass, a paper, an aluminium or a steel alloy. Alternative spacer structures may include fixing points, glue, paralepidids, bars (linear fixation), and grids as further described below. The spacer structure may also be formed by sinter points or points of foam.

In Fig. 2B, the structure 50 of supporting unit 32 is similar to that of the supporting unit 32 of Fig. 2A, except that the first and second plates 501, 502 are not in facing contact with the second surfaces 44. The first and second plates 501, 502 are fixed to and spaced from the second surfaces 44 by fixing points 504, which could be for instance sinter points or points of glue. These fixing points 504 can be arranged to provide a further fluid gap or air gap between the contact unit 28, 30 and the plate 501, 502. Alternatively, instead of fixing points 54, linear fixations can be provided. For instance, a grid (see Figs 3A and 3B) may be provided between a plate and a contact unit.

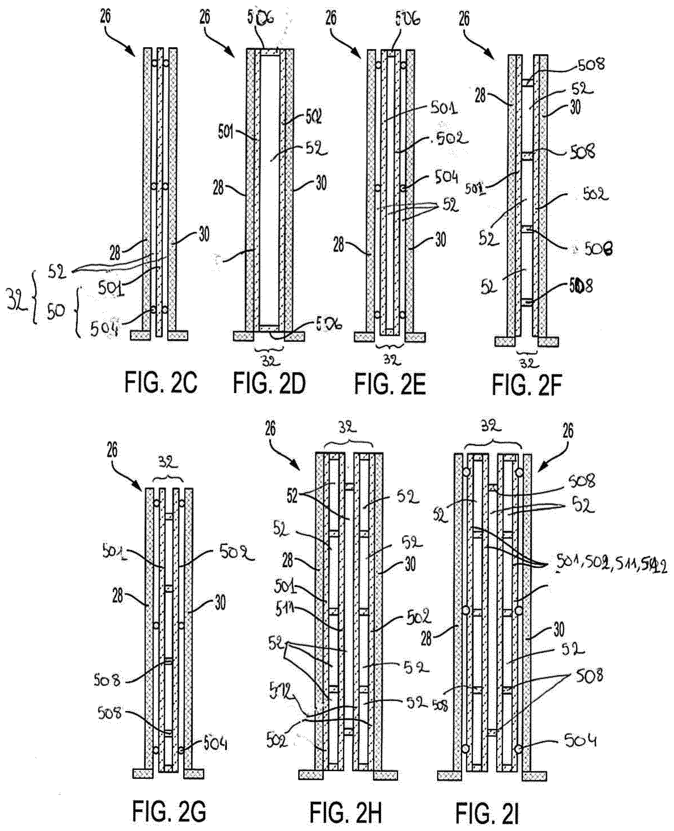

As depicted in Fig. 2C, the structure 50 may also be made of one plate 501 extending between the second surfaces 44 of the first and second contact units 28, 30 and fixed to said second surfaces 44 through fixing points 504. These fixing points 504 could be for instance sinter points or points of glue. These fixing points 504 are arranged to provide the fluid gap or air gap 52 between the contact unit 28, 30 and the plate 501. Alternatively, instead of fixing points, linear fixation can be provided. For instance, a grid is provided between a plate and a contact unit.

In Fig. 2D the structure 50 is a hollow parallelepiped with a first and second longitudinal plates 501, 502 contacting the second surfaces 44 of the first and second contact units 28, 30 and lateral faces 506connecting the first and second longitudinal faces 501, 502. The hollow space forms the fluid gap 52.

In Fig. 2E the structure 50 is sensibly similar to the parallelepiped of Fig. 2D, except that the first and second longitudinal plates 501, 502 are not in facing contact with the second surfaces 44, but are fixed to the second surfaces through fixing points 504, which could be for instance sinter points or points of glue. These fixing points 504 can be arranged to provide a further fluid gap or air gap between the contact unit and the parallelepiped. Alternatively, instead of fixing points, linear fixation can be provided. For instance, a grid may be provided between a plate and a contact unit.

The structure 50 of Fig. 2F has the shape of a ladder, with a first plate 501 in facing contact with the first contact unit 28, a second plate 502 in facing contact with the second contact unit 30. The first and second plates 501, 502 are connected together at intervals by a plurality of bars 508 perpendicular to the first and second plates 501, 502. Between two adjacent bars and the first and second plates, the fluid gap 52 is provided.

In Fig. 2G, the structure 50 is sensibly similar to the structure 50 of Fig. 2F, except that the first and second plates 501, 502 are not in facing contact with the second surfaces 44. The first and second plates 501, 502 are fixed to and spaced from the second surfaces 44 through fixing points 504, which could be for instance sinter points or points of glue. These fixing points 504 can be arranged to provide a further fluid gap or air gap 52 between the contact units 28, 30 and the plates 501, 502. Alternatively, instead of fixing points, fixation with bars 508, linear elements, or grids can be provided.

In Fig. 2H and Fig. 21, the structure 50 comprises a plurality of plates 501, 502, 511, 512 extending parallel to each other and connected to each other by bars 508. The bars 508 may extend perpendicular to the plates 501, 502. For instance, four plates are provided. The outermost plates 501, 502 are connected to the contact units 28, 30. In Fig. 2H the outermost plates 501, 502 are in facing contact with the contact units 28, 30. In Fig. 2I a linear or point-fixation 504 is provided.

Fig. 3A shows another embodiment of a thermal fin 26 in an exploded view. In dotted lines, the first battery cell 36 and the second battery cell 37 are represented. The cooler 40 is also represented in dotted lines. Between the first and the second battery cells 36, 37, the thermal fin 26 with the first and the second contact units 28, 30 is arranged. Each contact unit 28, 30 has a L-shape with a first portion 34 extending along a face of a battery cell 36, 37 and a second portion 38, smaller than the first portion 34, facing and directly or indirectly contacting the cooler 40. The first and the second contact unit 28, 30 are both made of the same material, which has a high thermal conductivity. The material can be copper or aluminium alloy.

In an embodiment, shown in Fig. 3B, which is otherwise similar to the embodiment of Fig. 3A, the first and the second contact units 28, 30 are each made of two different materials. For instance, a plate of graphite 60 is glued to a plate of copper, or aluminium alloy or steel alloy 62. This laminar construction allows for a better flexibility. Indeed, the graphite is more elastic or flexible than copper or aluminium, and the entire system is easier to manufacture, handle or use. The contact height H corresponds to the thermal fin height Hfin. The first portion 34 of the contact units 28, 30 has a contact thickness t (see Fig. 3A) which can be of about 0.05 to 1 mm. The first portion 34 of the contact units 28, 30 has a contact length L which can be of about 100 to 1000 mm.

In Figs 3A and 3B, the supporting unit 32 extends between the two contact units 28, 30 and comprises the structure 50. The structure 50 comprises a plate 501 sandwiched between a first and a second grid 64, 66. Depending on the plate material, the plate 501 may either be in contact with the cooler 40 (if the plate material for instance has a high thermal conductivity) or be at a distance from the cooler (for instance for a plate material with a lower thermal conductivity). The grids 64, 66 are made for example of paper. The holes 70 in the grids form the fluid gap (air gap) 52 between the contact units and the plate 501.

The plate 501 has a thickness tₚ of about 0.02 to 1 mm. The plate 501 is for instance made of aluminium alloy or steel alloy or paper. As mentioned above, the plate 501 may or may not contact the cooler 40, depending on the plate material thermal conductivity. The dimension (length Lp and height Hp) of the plate 501 are sensibly identical to the dimensions of the first portion 34 of the contact unit 28, 30.

Each grid has a thickness t_{grid} of about 0.02 to 1.0 mm which allows air gaps 52 of about the same thickness. The grids 64, 66 may be glued to the plate 501 or to the contact units 28, 30.

The thermal fin 26 thus formed by the contact units 28, 30, the grids 64, 66 and the plate 501 has a total fin thickness t_{fin} in a cross-section which is in the range of 0.5 to 10 mm, and more particularly in the range of 0.5 to 4mm. For instance a thermal fin between battery modules will have a greater thickness than a between-cell thermal fin. Therefore, the first range may apply to a thermal fin between battery modules, wherein the second range applies to a thermal fin between battery cells. In particular a thickness between 0.5 and 2 mm may be provided for a between-cell thermal fin.

A battery subassembly, and for instance a battery module may also be surrounded by one or a plurality of thermal fins as described below, wherein the first contact unit is for instance in facing contact with one battery module, wherein the second contact unit is in contact surface with another battery module.

For illustration purpose, Fig. 4A to Fig. 4C show schematically a battery cell or a battery module with a thermal fin 26. In these figures, the center of the arrangement (the part which extends within the first contact unit 28) may either be a battery cell 36 or a battery module M comprising a plurality of battery cells. The thermal fin 26 comprises the first contact unit 28, the second contact unit 30 and the structure 50 arranged to form fluid gaps 52. The structure 50 comprises a first plate 501, a second plate 502 and the spacer structure 503. On the figures, a particular structure of the thermal fin 26 is represented, by way of example. For instance, any thermal fin arrangement as disclosed above may be used.

As seen on the figures, one thermal fin 26 may surround the cell (notably for cylindrical cells or for prismatic cells having an oval cross section) or several thermal fins 26 may be arranged adjacent to each other to surround for instance a battery module.

Fig. 4A shows schematically a prismatic battery module M or battery cell 36 having a parallelepiped shape. Fig. 4A is a side view. The thermal fin 26 surrounds the parallelepiped shape (except from the base). In Fig. 4B the prismatic battery module M or battery cell 36 has an oval shape in cross section. In Fig. 4C shows a cylindrical battery module M or battery cell C. The thermal fin 26 surrounds the entire periphery of the module M or cell.

Fig. 5A to Fig. 5C also show schematically a battery cell 36 or a battery module M with a thermal fin 26. In these figures, the thermal fin 26 does not comprise a second contact unit. The thermal fin comprises in these embodiments only a first contact unit 28 and a supporting unit 32. The supporting unit 32 comprises the structure 50 which forms air gaps 52. The structure 50 as represented comprises a first plate 501 surrounding the first contact unit 28 and in facing contact with the first contact unit 28, the spacer structure 503 and a second plate 502 surrounding the spacer structure 503. Fig. 5A is a schematic side view and the module M or the cell 36 (a prismatic battery module M or battery cell 36 with a parallelepiped shape) is therefore surrounded only on three sides (the fourth side being the base). Fig. 5B and Fig. 5C are schematic cross-section views showing the thermal fin surrounding the battery module M or battery cell 36.

The entire arrangement of the thermal fin allows a high thermal resistance (low thermal conductivity) in a horizontal direction (between two adjacent cells 36, 37 or two adjacent battery subassemblies) and a low thermal resistance (high thermal conductivity) along the length and width of the contact units 28, 30 for heat conduction to the cooler 40. The cooling system comprising a plurality of thermal fins 26 is thus entirely passive, light and not cumbersome.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein.

### Reference Symbols

battery module 10
battery cells 12
cooling fins 14
cooler 16
first layer 18
second layer 20
third layer 22
last layer 24
thermal isolator 26
first contact unit 28
second contact unit 30
supporting unit 32
first portion 34
first battery cell 36
second portion 38
cooler 40
first surface 42
second surface 44
structure 50
plates 501, 502, 511, 512
fixing points 504
lateral faces 506
bars 508
bumps 510
fluid gaps 52
holes 70
height contact unit H
length contact unit L
height plate Hp
length plate Lp
fin length Lfin
fin height Hfin
contact unit thickness t
plate thickness tₚ
grid thickness t_{grid}
fin/total thickness t_{fin}

## Claims

1. Thermal fin (26) for a battery apparatus configured to prevent thermal propagation between battery pack subassemblies, the thermal fin (26) comprising:
a first contact unit (28) adapted to be in facing contact with a first battery pack subassembly (12);
a supporting unit (32) adjacent the first contact unit (28);
wherein the thermal fin (26) extends in a fin plane, has a fin length (Hfin) in cross section along a longitudinal axis and a fin thickness (t _{fin}), wherein the fin thickness is much smaller than the fin length, and wherein the thermal resistance within the fin plane (X, Y) is lower than the thermal resistance in a direction normal to the fin plane, such that the thermal fin ensures a thermal management function and a thermal safety function of the battery apparatus.

2. Thermal fin (26) according to claim 1, further comprising a second contact unit (30) adapted to be in facing contact with a second battery pack subassembly (12), and wherein the supporting unit (32) is sandwiched between the first and the second contact unit (28, 30).

3. Thermal fin (26) according to claim 1 or 2, wherein the supporting unit (32) comprises a structure (50) arranged to establish an insulating gap (52) between the first and the second contact unit (28, 30).

4. Thermal fin (26) according to claim 3, wherein the structure (50) comprises a plate (501) sandwiched between a spacer structure (503) such that insulating gaps (52) are provided on both sides of the supporting plate.

5. Thermal fin (26) according to claim 3 or claim 4, wherein the insulating gap (52) is a fluid gap, and preferably an air gap.

6. Thermal fin (26) according to any of claims 3 to 5, wherein the first and second contact units (28, 30) on the one hand and the structure (50) on the other hand are made in two different materials.

7. Thermal fin (26) according to any of claims 3 to 6, wherein the first and/or second contact unit comprises copper and/or aluminium and/or without graphite.

8. Thermal fin (26) according to any of claims 3 to 7, wherein the structure (50) is made of paper material.

9. thermal fin (26) according to any of claims 3 to 8, wherein the thickness of the fluid gap in cross section is of about 0.05 to 1 mm.

10. Thermal fin (26) according to any of claims 3 to 9, wherein the structure (50) has a grid pattern.

11. Thermal fin (26) according to any of claims 3 to 10, wherein the structure (50) is at least partially corrugated.

12. Thermal fin (26) according to any of claims 1 to 11, wherein the thermal fin has a total thickness in a direction normal to the fin plane of less than 10 mm, and in particular between 0.5 and 4 mm.

13. Battery module comprising a plurality of electrically interconnected battery cells and a plurality of thermal fins according to any of claims 1 to 12, wherein each thermal fin is arranged in thermal communication with at least two of said plurality of battery cells, and wherein the first and the second contact units are connected to a cooler.

14. Battery module according to claim 13, wherein the plurality of battery cells comprise a substantially planar construction such that an adjacently-facing relation is formed between one thermal fin (26) and at least two of said plurality of battery cells.

15. Battery module according to claim 13 or claim 14, wherein the first contact unit (28) is in facing contact with a first battery cell (36) and the second contact unit (30) is in facing contact with a second battery cell (37).
